(19) Europäisches Patentamt
European Patent Office
Office européen des brevets

(11) **EP 3 330 307 A1**

(12) **EUROPÄISCHE PATENTANMELDUNG**

(43) Veröffentlichungstag:
**06.06.2018 Patentblatt 2018/23**

(51) Int Cl.:
**C08G 18/48** *(2006.01)*     **C08G 18/66** *(2006.01)*
**C08G 18/76** *(2006.01)*     **C08G 18/81** *(2006.01)*
**C08G 18/32** *(2006.01)*

(21) Anmeldenummer: **16202104.2**

(22) Anmeldetag: **05.12.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERWENDUNG VON ACRYLSÄUREESTERN UND AMIDEN ZUR ERNIEDRIGUNG VON EMISSIONEN EINES POLYURETHANSCHAUMSTOFFES**

(57) Die vorliegende Erfindung betrifft die Verwendung

i) einer oder mehrerer Verbindungen ausgewählt aus der Gruppe bestehend aus

$$R^1R^2C=CR^3\text{-}C(O)\text{-}O\text{-}R^4 \qquad (I.),$$

$$R^5R^6C=CR^7\text{-}C(O)\text{-}O\text{-}R^8\text{-}O\text{-}(O)C\text{-}R^9C=CR^{10}R^{11} \qquad (II.),$$

$$R^{12}R^{13}C=CR^{14}\text{-}C(O)\text{-}O\text{-}(O)C\text{-}R^{14}C=CR^{13}R^{12} \qquad (III.) \qquad \text{und}$$

$$R^{15}R^{16}C=CR^{17}\text{-}C(O)\text{-}NR^{18}\text{-}R^{19} \qquad (IV.),$$

wobei

$R^1$ bis $R^7$ und $R^9$ bis $R^{19}$ unabhängig voneinander für H, einen gesättigten oder ungesättigten, linearen oder verzweigten, aliphatischen oder cycloaliphatischen oder einen aromatischen oder araliphatischen Rest mit bis zu 20 Kohlenstoffatomen stehen, der gegebenenfalls Heteroatome, wie N, S oder O enthalten kann und der gegebenenfalls substituiert sein kann, beispielsweise durch isocyanatreaktive Gruppen, bevorzugt durch OH-Gruppen,
und

$R^8$ für einen gesättigten oder ungesättigten, linearen oder verzweigten, aliphatischen zweibindigen Rest mit bis zu 20 Kohlenstoffatomen steht, der gegebenenfalls Heteroatome, wie N, S oder O enthalten kann und der gegebenenfalls substituiert sein kann, beispielsweise durch isocyanatreaktive Gruppen, bevorzugt durch OH-Gruppen,
bzw.

ii) von Polyesterpolyolen, bevorzugt Polyesterdiolen, erhältlich durch Polykondensation von Maleinsäure, Fumarsäure, Methacrylsäure oder Acrylsäure mit oligomeren Diolen wie Butandiol, Diethylenglykol, Propylenglycol, 1,3 Propandiol und/oder Triolen wie Glycerin mit einem Molekulargewichtsfaktor pro Doppelbindung von 150 bis 3000, einer Funktionalität von 2 bis 6, einer Hydroxylzahl von 20 bis 800 und einer Säurezahl von 0 bis 15,

in Verfahren zur Herstellung von Polyurethanen, bevorzugt Polyurethanschaumstoffen zur Erniedrigung der Aldehydemission der resultierenden Polyurethane, bzw. Polyurethanschaumstoffe, ein Verfahren zur Herstellung von Polyurethanen, bevorzugt Polyurethanschaumstoffen unter Verwendung einer oder mehrerer Verbindungen der Formel IV, sowie die aus diesem Verfahren erhältlichen Polyurethane.

EP 3 330 307 A1

# EP 3 330 307 A1

**Beschreibung**

Es ist aus dem Stand der Technik bekannt, dass Polyurethanschaumstoffe Aldehyde emittieren können, wobei diese Aldehydemissionen im Allgemeinen unerwünscht sind. Nachgewiesen werden diese Emissionen z.B. bei Messungen nach der VDA 275 (Flaschenmethode, 60°C) oder auch nach der VDA 276 (Emissionskammerprüfung, 65°C).

WO2015082316 beschreibt, dass bestimmte Cyanacetamide geeignet sein können, um die Emissionen von Formaldehyd aus Schaumstoffen zu reduzieren. WO2015082316 beschreibt darüber hinaus, dass bestimmte Ester der Cyanessigsäure und von 3-Oxo-Carbonsäuren hierzu geeignet sein können.

JP 2004129926 beschreibt ein polymerisiertes Acrylatharz (weitgehend frei von ungesättigten Doppelbindungen) zur Absorption von Formaldehyd. Dabei wird die bekannte Wirkung von Acetoacetaten (WO2015082316) genutzt, die die Erfinder an das Acrylatharz angehängt haben.

DE 199 19 826 beschreibt die Verwendung bestimmter Additive, wie z.B. $\alpha,\beta$-ungesättigter Carbonsäure-Derivate bei der Herstellung Polyurethanschäumen zwecks Reduktion des Gehalts an primären aromatischen Aminen. Die Verwendung solcher Verbindungen bei der Herstellung von Polyurethanen zur Reduktion der Aldehydemission der resultierenden Polyurethane wird nicht offenbart.

Aufgabe der vorliegenden Erfindung war die Bereitstellung von Polyurethanen, bevorzugt Polyurethanschaumstoffen, die eine noch geringere Aldehydemission (Formaldehyd und Acetaldehyd) als Polyurethane, bzw. Polyurethanschaumstoffe des Standes der Technik aufweisen.

Diese Aufgabe wird gelöst durch die Verwendung von -bevorzugt Isocyanat-reaktiven-Acrylsäureestern und -amiden und deren Derivaten bei der Herstellung der Polyurethane.

Gegenstand der vorliegenden Erfindung ist daher die Verwendung von $\alpha,\beta$-ungesättigten Carbonsäurederivaten, bevorzugt $\alpha,\beta$-ungesättigten Carbonsäureestern und/oder -amiden in Verfahren zur Herstellung von Polyurethanen, bevorzugt Polyurethanschaumstoffen zur Erniedrigung der Aldehydemission der resultierenden Polyurethane, bzw. Polyurethanschaumstoffe.

Ein bevorzugter Gegenstand der vorliegenden Erfindung ist die Verwendung

i) einer oder mehrerer Verbindungen ausgewählt aus der Gruppe bestehend aus

$$R^1R^2C=CR^3\text{-}C(O)\text{-}O\text{-}R^4 \qquad (I.),$$

$$R^5R^6C=CR^7\text{-}C(O)\text{-}O\text{-}R^8\text{-}O\text{-}(O)C\text{-}R^9C=CR^{10}R^{11} \qquad (II.),$$

$$R^{12}R^{13}C=CR^{14}\text{-}C(O)\text{-}O\text{-}(O)C\text{-}R^{14}C=CR^{13}R^{12} \qquad (III.)$$

und

$$R^{15}R^{16}C=CR^{17}\text{-}C(O)\text{-}NR^{18}\text{-}R^{19} \qquad (IV.),$$

wobei

$R^1$ bis $R^7$ und $R^9$ bis $R^{19}$ unabhängig voneinander für H, einen gesättigten oder ungesättigten, linearen oder verzweigten, aliphatischen oder cycloaliphatischen oder einen aromatischen oder araliphatischen Rest mit bis zu 20 Kohlenstoffatomen stehen, der gegebenenfalls Heteroatome, wie N, S oder O enthalten kann und der gegebenenfalls substituiert sein kann, beispielsweise durch isocyanatreaktive Gruppen, bevorzugt durch OH-Gruppen,
und
$R^8$ für einen gesättigten oder ungesättigten, linearen oder verzweigten, aliphatischen zweibindigen Rest mit bis zu 20 Kohlenstoffatomen steht, der gegebenenfalls Heteroatome, wie N, S oder O enthalten kann und der gegebenenfalls substituiert sein kann, beispielsweise durch isocyanatreaktive Gruppen, bevorzugt durch OH-Gruppen,

und/oder
ii) von Polyesterpolyolen, bevorzugt Polyesterdiolen, erhältlich durch Polykondensation von Maleinsäure, Fumarsäure, Methacrylsäure oder Acrylsäure mit oligomeren Diolen wie Butandiol, Diethylenglykol, Propylenglycol, 1,3 Propandiol und/oder Triolen wie Glycerin mit einem Molekulargewichtsfaktor pro Doppelbindung von 150 bis 3000, einer Funktionalität von 2 bis 6, einer Hydroxylzahl von 20 bis 800 und einer Säurezahl von 0 bis 15,

in Verfahren zur Herstellung von Polyurethanen, bevorzugt Polyurethanschaumstoffen zur Erniedrigung der Aldehydemission der resultierenden Polyurethane, bzw. Polyurethanschaumstoffe.

Sofern es Verbindungen gibt, die sowohl unter die Definitionen der Komponente (ii) als auch der Komponente (II) fallen, sollen diese Verbindungen der Komponente (ii) zugeordnet werden.

Ein besonders bevorzugter Gegenstand der vorliegenden Erfindung die Verwendung

i) einer oder mehrerer Verbindungen ausgewählt aus der Gruppe bestehend aus

$$R^1R^2C=CR^3\text{-}C(O)\text{-}O\text{-}R^4 \qquad (\text{I.}),$$

$$R^5R^6C=CR^7\text{-}C(O)\text{-}O\text{-}R^8\text{-}O\text{-}(O)C\text{-}R^9C=CR^{10}R^{11} \qquad (\text{II.}),$$

$$R^{12}R^{13}C=CR^{14}\text{-}C(O)\text{-}O\text{-}(O)C\text{-}R^{14}C=CR^{13}R^{12} \qquad (\text{III.})$$

und

$$R^{15}R^{16}C=CR^{17}\text{-}C(O)\text{-}NR^{18}\text{-}R^{19} \qquad (\text{IV.}),$$

wobei

$R^1$ bis $R^7$ und $R^9$ bis $R^{19}$ unabhängig voneinander für H, einen gesättigten oder ungesättigten, linearen oder verzweigten, aliphatischen oder cycloaliphatischen oder einen aromatischen oder araliphatischen Rest mit bis zu 20 Kohlenstoffatomen stehen, der gegebenenfalls Heteroatome, wie N, S oder O enthalten kann und der gegebenenfalls substituiert sein kann, beispielsweise durch beispielsweise durch isocyanatreaktive Gruppen, bevorzugt OH-Gruppen,

$R^8$ für einen gesättigten oder ungesättigten, linearen oder verzweigten, aliphatischen zweibindigen Rest mit bis zu 20 Kohlenstoffatomen steht, der gegebenenfalls Heteroatome, wie N, S oder O enthalten kann und der gegebenenfalls substituiert sein kann, beispielsweise durch isocyanatreaktive Gruppen, bevorzugt durch OH-Gruppen,

und/oder

ii) von Polyesterpolyolen, bevorzugt Polyesterdiolen, erhältlich durch Polykondensation von Maleinsäure, Fumarsäure, Methacrylsäure oder Acrylsäure mit oligomeren Diolen wie Butandiol, Diethylenglykol, Propylenglycol, 1,3 Propandiol und/oder Triolen wie Glycerin mit einem Molekulargewichtsfaktor pro Doppelbindung von 150 bis 3000, einer Funktionalität von 2 bis 6, einer Hydroxylzahl von 20 bis 800 und einer Säurezahl von 0 bis 15,

in Verfahren zur Herstellung von Polyurethanschaumstoffen zur Erniedrigung der Aldehydemission der resultierenden Polyurethanschaumstoffe, wobei die Herstellung der Polyurethanschaumstoffe durch Reaktion einer Komponente A, enthaltend:

A1   gegenüber Isocyanaten reaktionsfähige Wasserstoffatome aufweisende Verbindungen mit einer OH-Zahl gemäß DIN 53240 von $\geq$ 15 bis < 260 mg KOH/g,

A2   gegebenenfalls gegenüber Isocyanaten reaktionsfähige Wasserstoffatome aufweisende Verbindungen mit einer OH-Zahl gemäß DIN 53240 von $\geq$ 260 bis < 4000 mg KOH/g,

A3   Wasser und/oder physikalischen Treibmittel,

A4   Hilfs- und Zusatzstoffen wie

a) Katalysatoren,
b) oberflächenaktive Zusatzstoffen,
c) Pigmenten und/oder Flammschutzmitteln,

wobei Radikalstarter und Katalysatoren, die eine vinylische Polymerisation katalysieren, ausgenommen sind,

und einer Komponente B, wobei es sich um eine oder mehrere Verbindungen ausgewählt aus der Gruppe bestehend aus (I) bis (IV) bzw. (ii) handelt,

mit

C Di- und/oder Polyisocyanaten.

Die Einsatzmenge der erfindungsgemäßen Komponente B bezogen auf 1 kg der Komponenten A1 und C beträgt 1 bis 100 g, bevorzugt 5 bis 50 g (Die Angabe 1 kg bezieht sich auf die Summe aus A1 und C).

Komponenten B wird nicht vinylisch polymerisiert.

Ein ganz besonders bevorzugter Gegenstand der vorliegenden Erfindung (Alternative I) ist die Verwendung

i) einer oder mehrerer Verbindungen ausgewählt aus der Gruppe bestehend aus

$$R^1R^2C=CR^3-C(O)-O-R^4 \qquad (I.),$$

$$R^5R^6C=CR^7-C(O)-O-R^8-O-(O)C-R^9C=CR^{10}R^{11} \qquad (II.),$$

$$R^{12}R^{13}C=CR^{14}-C(O)-O-(O)C-R^{14}C=CR^{13}R^{12} \qquad (III.)$$

und

$$R^{15}R^{16}C=CR^{17}-C(O)-NR^{18}-R^{19} \qquad (IV.),$$

wobei

$R^1$ bis $R^7$ und $R^9$ bis $R^{19}$ unabhängig voneinander für H, einen gesättigten oder ungesättigten, linearen oder verzweigten, aliphatischen oder cycloaliphatischen oder einen aromatischen oder araliphatischen Rest mit bis zu 20 Kohlenstoffatomen stehen, der gegebenenfalls Heteroatome, wie N, S oder O enthalten kann und der gegebenenfalls substituiert sein kann, beispielsweise durch isocyanatreaktive Gruppen, bevorzugt OH-Gruppen,
$R^8$ für einen gesättigten oder ungesättigten, linearen oder verzweigten, aliphatischen zweibindigen Rest mit bis zu 20 Kohlenstoffatomen steht, der gegebenenfalls Heteroatome, wie N, S oder O enthalten kann und der gegebenenfalls substituiert sein kann, beispielsweise durch isocyanatreaktive Gruppen, bevorzugt durch OH-Gruppen,

und/oder

ii) von Polyesterpolyolen, bevorzugt Polyesterdiolen, erhältlich durch Polykondensation von Maleinsäure, Fumarsäure, Methacrylsäure oder Acrylsäure mit oligomeren Diolen wie Butandiol, Diethylenglykol, Propylenglycol, 1,3 Propandiol und/oder Triolen wie Glycerin mit einem Molekulargewichtsfaktor pro Doppelbindung von 150 bis 3000, einer Funktionalität von 2 bis 6, einer Hydroxylzahl von 20 bis 800 und einer Säurezahl von 0 bis 15,

in Verfahren zur Herstellung von Polyurethanschaumstoffen zur Erniedrigung der Aldehydemission der resultierenden Polyurethanschaumstoffe, wobei die Herstellung der Polyurethanschaumstoffe durch Reaktion einer Komponente A, enthaltend:

A1 75 bis 99,3 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 15 bis < 260 mg KOH/g,

A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3 0,5 bis 24,8 Gew.-Teile (bezogen auf die Summe der Gew.-Teile der Komponenten A1 bis A4) Wasser und/oder physikalische Treibmittel,

A4 0,2 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

wobei Radikalstarter und Katalysatoren, die eine vinylische Polymerisation katalysieren, ausgenommen sind,

und 1 bis 100 g pro kg der Komponenten A1 und C, bevorzugt 5 bis 50 g pro kg der Komponenten A1 und C einer Komponente B, wobei es sich um eine oder mehrere Verbindungen ausgewählt aus der Gruppe bestehend aus (I) bis (IV) bzw. (ii) handelt,
mit

C Di- und/oder Polyisocyanaten,

wobei alle Gewichtsteilangaben der Komponenten A1 bis A4 so normiert sind, dass die Summe der Gewichtsteile der Komponenten A1+A2+A3+A4 in der Zusammensetzung 100 ergeben.

Ebenfalls ganz besonders bevorzugt (Alternative II) ist die Verwendung

i) einer oder mehrerer Verbindungen ausgewählt aus der Gruppe bestehend aus

$$R^1R^2C=CR^3-C(O)-O-R^4 \qquad (I.),$$

$$R^5R^6C=CR^7-C(O)-O-R^8-O-(O)C-R^9C=CR^{10}R^{11} \qquad (II.),$$

$$R^{12}R^{13}C=CR^{14}-C(O)-O-(O)C-R^{14}C=CR^{13}R^{12} \qquad (III.)$$

und

$$R^{15}R^{16}C=CR^{17}-C(O)-NR^{18}-R^{19} \qquad (IV.),$$

wobei

$R^1$ bis $R^7$ und $R^9$ bis $R^{19}$ unabhängig voneinander für H, einen gesättigten oder ungesättigten, linearen oder verzweigten, aliphatischen oder cycloaliphatischen oder einen aromatischen oder araliphatischen Rest mit bis zu 20 Kohlenstoffatomen stehen, der gegebenenfalls Heteroatome, wie N, S oder O enthalten kann und der gegebenenfalls substituiert sein kann, beispielsweise durch isocyanatreaktive Gruppen, bevorzugt OH-Gruppen,

$R^8$ für einen gesättigten oder ungesättigten, linearen oder verzweigten, aliphatischen zweibindigen Rest mit bis zu 20 Kohlenstoffatomen steht, der gegebenenfalls Heteroatome, wie N, S oder O enthalten kann und der gegebenenfalls substituiert sein kann, beispielsweise durch isocyanatreaktive Gruppen, bevorzugt durch OH-Gruppen,

und/oder

ii) von Polyesterpolyolen, bevorzugt Polyesterdiolen, erhältlich durch Polykondensation von Maleinsäure, Fumarsäure, Methacrylsäure oder Acrylsäure mit oligomeren Diolen wie Butandiol, Diethylenglykol, Propylenglykol, 1,3 Propandiol und/oder Triolen wie Glycerin mit einem Molekulargewichtsfaktor pro Doppelbindung von 150 bis 3000, einer Funktionalität von 2 bis 6, einer Hydroxylzahl von 20 bis 800 und einer Säurezahl von 0 bis 15,

in Verfahren zur Herstellung von Polyurethanschaumstoffen zur Erniedrigung der Aldehydemission der resultierenden Polyurethanschaumstoffe, wobei die Herstellung der Polyurethanschaumstoffe durch Reaktion einer Komponente A, enthaltend:

A1    25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 15 bis < 260 mg KOH/g,

A2    20 bis 74,3 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3    0,5 bis 25 Gew.-Teile (bezogen auf die Summe der Gew.-Teile der Komponenten A1 bis A4) Wasser und/oder physikalische Treibmittel,

A4    0,2 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

wobei Radikalstarter und Katalysatoren, die eine vinylische Polymerisation katalysieren, ausgenommen sind,

und 1 bis 100 g pro kg der Komponenten A1 und C, bevorzugt 5 bis 50 g pro kg der Komponenten A1 und C einer Komponente B, wobei es sich um eine oder mehrere Verbindungen ausgewählt aus der Gruppe bestehend aus (I) bis (IV) bzw. (ii) handelt,

mit

C Di- und/oder Polyisocyanaten, wobei alle Gewichtsteilangaben der Komponenten A1 bis A4 so normiert sind, dass die Summe der Gewichtsteile der Komponenten A1+A2+A3+A4 in der Zusammensetzung 100 ergeben.

Gegenstand der vorliegenden Erfindung ist darüber hinaus ein Verfahren zur Herstellung von Polyurethanen, bevorzugt Polyurethanschaumstoffen durch Umsetzung von gegenüber Isocyanaten reaktionsfähigen Wasserstoffatomen aufweisenden Verbindungen mit Di- und/oder Polyisocyanaten in Gegenwart von $\alpha,\beta$-ungesättigten Carbonsäureamiden.

Ein bevorzugter Gegenstand der vorliegenden Erfindung ist ein Verfahren zur Herstellung von Polyurethanen, bevorzugt Polyurethanschaumstoffen durch Umsetzung von gegenüber Isocyanaten reaktionsfähigen Wasserstoffatomen aufweisenden Verbindungen mit Di- und/oder Polyisocyanaten in Gegenwart von einer oder mehrerer Verbindungen der Formel

$$R^{15}R^{16}C=CR^{17}\text{-}C(O)\text{-}NR^{18}\text{-}R^{19} \qquad (IV.),$$

wobei

$R^{15}$ bis $R^{19}$ unabhängig voneinander für H, einen gesättigten oder ungesättigten, linearen oder verzweigten, aliphatischen oder cycloaliphatischen oder einen aromatischen oder araliphatischen Rest mit bis zu 20 Kohlenstoffatomen stehen, der gegebenenfalls Heteroatome, wie N, S oder O enthalten kann und der gegebenenfalls substituiert sein kann, beispielsweise durch isocyanatreaktive Gruppen, bevorzugt durch OH-Gruppen.

Gegenstand der vorliegenden Erfindung sind auch die nach dem beschriebenen Verfahren erhältlichen Polyurethane, bzw. Polyurethanschaumstoffe.

Gegenstand der vorliegenden Erfindung ist insbesondere ein Verfahren zur Herstellung von Polyurethanschaumstoffen, bei dem eine Komponente A, enthaltend

A1 gegenüber Isocyanaten reaktionsfähige Wasserstoffatome aufweisende Verbindungen mit einer OH-Zahl gemäß DIN 53240 von $\geq$ 15 bis < 260 mg KOH/g,

A2 gegebenenfalls gegenüber Isocyanaten reaktionsfähige Wasserstoffatome aufweisende Verbindungen mit einer OH-Zahl gemäß DIN 53240 von $\geq$ 260 bis < 4000 mg KOH/g,

A3 Wasser und/oder physikalischen Treibmittel,

A4 Hilfs- und Zusatzstoffe wie

a) Katalysatoren,

b) oberflächenaktive Zusatzstoffe,

c) Pigmente und/oder Flammschutzmittel,

wobei Radikalstarter und Katalysatoren, die eine vinylische Polymerisation katalysieren, ausgenommen sind,

und eine Komponente B, wobei es sich um eine oder mehrere Verbindungen der Formel

$$R^{15}R^{16}C=CR^{17}\text{-}C(O)\text{-}NR^{18}\text{-}R^{19} \qquad (IV.),$$

wobei

$R^{15}$ bis $R^{19}$ unabhängig voneinander für H, einen gesättigten oder ungesättigten, linearen oder verzweigten, aliphatischen oder cycloaliphatischen oder einen gegebenenfalls substituierten aromatischen oder araliphatischen Rest mit bis zu 20 Kohlenstoffatomen stehen, der gegebenenfalls Heteroatome, wie N, S oder O enthalten kann und der gegebenenfalls substituiert sein kann, beispielsweise durch isocyanatreaktive Gruppen, bevorzugt durch OH-Gruppen.

mit

C Di- und/oder Polyisocyanaten

umgesetzt werden.

Die Einsatzmenge der erfindungsgemäßen Komponente B bezogen auf 1 kg der Komponenten A1 und C beträgt 1 bis 100 g, bevorzugt 5 bis 50 g (Die Angabe 1 kg bezieht sich auf die Summe aus A1 und C).

Ganz besonders bevorzugt (Alternative I) ist ein Verfahren zur Herstellung von Polyurethanschaumstoffen bei dem eine Komponente A, enthaltend

A1 75 bis 99,3 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240

von $\geq$ 15 bis < 260mg KOH/g,

A2     0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3     0,5 bis 24,8 Gew.-Teile (bezogen auf die Summe der Gew.-Teile der Komponenten A1 bis A4) Wasser und/oder physikalische Treibmittel,

A4     0,2 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

wobei Radikalstarter und Katalysatoren, die eine vinylische Polymerisation katalysieren, ausgenommen sind,

und

1 bis 100 g pro kg der Komponenten A1 und C, bevorzugt 5 bis 50 g pro kg der Komponenten A1 und C einer Komponente B, wobei es sich um eine oder mehrere Verbindungen der Formel

$$R^{15}R^{16}C=CR^{17}\text{-}C(O)\text{-}NR^{18}\text{-}R^{19} \qquad (IV.),$$

wobei

$R^{15}$ bis $R^{19}$ unabhängig voneinander für H, einen gesättigten oder ungesättigten, linearen oder verzweigten, aliphatischen oder cycloaliphatischen oder einen gegebenenfalls substituierten aromatischen oder araliphatischen Rest mit bis zu 20 Kohlenstoffatomen stehen, der gegebenenfalls Heteroatome, wie N, S oder O enthalten kann und der gegebenenfalls substituiert sein kann, beispielsweise durch isocyanatreaktive Gruppen, bevorzugt durch OH-Gruppen,
mit
C Di- und/oder Polyisocyanaten
umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

Ebenfalls ganz besonders bevorzugt (Alternative II) ist ein Verfahren zur Herstellung von Polyurethanschaumstoffen bei dem

A1     25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 15 bis < 260mg KOH/g,

A2     20 bis 74,3 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von $\geq$ 260 bis < 4000 mg KOH/g,

A3     0,5 bis 25 Gew.-Teile (bezogen auf die Summe der Gew.-Teile der Komponenten A1 bis A4) Wasser und/oder physikalische Treibmittel, bevorzugt 2-7 Gew.-Teile Wasser,

A4     0,2 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

wobei Radikalstarter und Katalysatoren, die eine vinylische Polymerisation katalysieren, ausgenommen sind,

und

1 bis 100 g pro kg der Komponenten A1 und C, bevorzugt 5 bis 50 g pro kg der Komponenten A1 und C einer Komponente B, wobei es sich um eine oder mehrere Verbindungen der Formel

$$R^{15}R^{16}C=CR^{17}\text{-}C(O)\text{-}NR^{18}\text{-}R^{19} \qquad (IV.),$$

wobei

$R^{15}$ bis $R^{19}$ unabhängig voneinander für H, einen gesättigten oder ungesättigten, linearen oder verzweigten, aliphatischen oder cycloaliphatischen oder einen gegebenenfalls substituierten aromatischen oder araliphatischen Rest mit bis zu 20 Kohlenstoffatomen stehen, der gegebenenfalls Heteroatome, wie N, S oder O enthalten kann und der gegebenenfalls substituiert sein kann, beispielsweise durch isocyanatreaktive Gruppen, bevorzugt durch OH-Gruppen,

mit

C Di- und/oder Polyisocyanaten

umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben.

Die Herstellung von Schaumstoffen auf Isocyanatbasis ist an sich bekannt und z.B. in DE-A 1 694 142, DE-A 1 694 215 und DE-A 1 720 768 sowie im Kunststoff-Handbuch Band VII, Polyurethane, herausgegeben von Vieweg und Höchtlein, Carl Hanser Verlag München 1966, sowie in der Neuauflage dieses Buches, herausgegeben von G. Oertel, Carl Hanser Verlag München, Wien 1993, beschrieben.

Für die Herstellung der Schaumstoffe auf Isocyanatbasis können die nachfolgend näher beschriebenen Komponenten eingesetzt werden.

Komponente A1

Ausgangskomponenten gemäß Komponente A1 sind Verbindungen mit mindestens zwei gegenüber Isocyanaten reaktionsfähigen Wasserstoffatomen mit einer OH-Zahl gemäß DIN 53240 von $\geq$ 15 bis < 260 mg KOH/g.

Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen speziell solche mit einer OH-Zahl gemäß DIN 53240 von $\geq$ 20 bis $\leq$ 150 mg KOH/g, bevorzugt > 20 bis $\leq$ 50 mg KOH/g, ganz besonders bevorzugt > 25 bis < 45 mg KOH/g, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der EP-A 0 007 502, Seiten 8 - 15, beschrieben werden. Mindestens zwei Hydroxylgruppen aufweisenden Polyether und Polyester sind erfindungsgemäß bevorzugt. Besonders bevorzugt sind mindestens zwei Hydroxylgruppen aufweisenden Polyether.

Die Herstellung der Polyetherpolyole erfolgt nach bekannten Methoden, vorzugsweise durch basenkatalysierte Polyaddition von Alkylenoxiden an polyfunktionelle, aktive Wasserstoffatome aufweisende Starterverbindungen, wie z.B. Alkohole oder Amine. Beispielhaft seien genannt: Ethylenglykol, Diethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke, Wasser, Methylamin, Ethylamin, Propylamin, Butylamin, Anilin, Benzylamin, o- und p-Toluidin, $\alpha,\beta$- Naphthylamin, Ammoniak, Ethylendiamin, Propylendiamin, 1,4-Butylendiamin, 1,2-, 1,3-, 1,4-, 1,5- und/oder 1,6-Hexamethylendiamin, o-, m-, und p-Phenylendiamin, 2,4-, 2,6-Toluylendiamin, 2,2'-, 2,4- und 4,4'-Diaminodiphenylmethan und Diethylendiamin.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann nur mit einem monomeren Epoxid durchgeführt werden, aber auch statistisch oder auch blockweise mit zwei oder drei unterschiedlichen monomeren Epoxiden erfolgen.

Verfahren zur Herstellung solcher Polyetherpolyole werden in "Kunststoffhandbuch, Band 7, Polyurethane", in "Reaction Polymers" sowie z.B. in US-A 1 922 451, US-A2 674 619, US-A 1 922 459, US-A 3 190 927 und US-A 3 346 557 beschrieben.

Die Polyaddition kann beispielsweise auch DMC-katalysiert erfolgen. DMC-Katalysatoren und deren Verwendung zur Herstellung von Polyetherpolyolen sind beispielsweise beschrieben in US 3 404 109, US 3 829 505, US 3 941 849, US 5 158 922, US 5 470 813, EP-A 700 949, EP-A 743 093, EP-A 761 708, WO-A 97/40086, WO-A 98/16310 und WO-A 00/47649.

In einer besonders bevorzugten Ausführungsform enthält Komponente A1 mindestens 30 Gew.-% mindestens eines Polyoxyalkylen-Polymers, bestehend aus einem Starter, Propylenoxid und ggf. Ethylenoxid und ggf. einem Endblock aus Ethylenoxid, wobei das Gesamtgewicht der Endblöcke im Mittel 3-20 Gew.-%, bevorzugt 5-15, besonders bevorzugt 6-10 Gew.-% bezogen auf das gesamte Gewicht aller Polyoxyalkylen-Polymere beträgt.

Neben den oben beschriebenen "einfachen" Polyetherpoyolen können auch Polyethercarbonatpolyole im erfindungsgemäßen Verfahren eingesetzt werden. Polyethercarbonatpolyole können z.B. durch katalytische Umsetzung von Ethylenoxid und Propylenoxid, ggf. weiteren Alkylenoxiden, und Kohlendioxid in Anwesenheit von H-funktionellen Startersubstanzen erhalten werden (siehe z.B. EP-A 2046861).

Methoden zur Herstellung von Polyesterpolyolen sind ebenfalls gut bekannt und z.B. beschrieben in den beiden oben genannten Literaturstellen ("Kunststoffhandbuch, Band 7, Polyurethane", "Reaction Polymers"). Die Polyesterpolyole werden i.a. durch Polykondensation von mehrfunktionellen Carbonsäuren oder deren Derivaten, wie z.B. Säurechloriden oder -anhydriden, mit mehrfunktionellen Hydroxylverbindungen hergestellt.

Als mehrfunktionelle Carbonsäuren können beispielsweise verwendet werden: Adipinsäure, Phthalsäure, Isophthalsäure, Terephthalsäure, Oxalsäure, Bernsteinsäure, Glutarsäure, Azelainsäure, Sebacinsäure, Fumarsäure oder Maleinsäure.

Als mehrfunktionelle Hydroxylverbindungen können beispielsweise verwendet werden: Ethylenglykol, Diethylenglykol, Triethylenglykol, 1,2-Propylenglykol, Dipropylenglykol, 1,3-Butandiol, 1,4-Butandiol, 1,6-Hexandiol, 1,12-Dodecandiol, Neopentylglykol, Trimethylolpropan, Triethylolpropan oder Glycerin.

Die Herstellung der Polyesterpolyole kann weiterhin auch durch Ringöffnungspolymerisation von Lactonen (z.B. Caprolacton) mit Diolen und/oder Triolen als Starter erfolgen.

Als Hydroxylgruppen-aufweisende Verbindungen der Komponente A1 können auch Polymerpolyole, PHD-Polyole und PIPA-Polyole in Komponente A1 eingesetzt werden. Polymerpolyole sind Polyole, die Anteile von durch radikalische Polymerisation geeigneter Monomere wie Styrol oder Acrylnitril in einem Basispolyol erzeugten festen Polymeren enthalten. PHD (Polyharnstoffdipsersion)-Polyole werden beispielsweise hergestellt durch in situ Polymerisation eines Isocyanats oder einer Isocyanat-Mischung mit einem Diamin und/oder Hydrazin in einem Polyol, vorzugsweise einem Polyetherpolyol. Vorzugsweise wird die PHD-Dispersion hergestellt durch Umsetzung einer Isocyanat-Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol, hergestellt durch Alkoxylierung eines trifunktionellen Starters (wie beispielsweise Glycerin und/oder Trimethylolpropan). Verfahren zur Herstellung von PHD-Dispersionen sind beispielsweise beschrieben in US 4,089,835 und US 4,260,530. Bei den PIPA-Polyolen handelt es sich um durch Polyisocyanat-Polyaddition mit Alkanolaminen-modifizierte Polyetherpolyole, wobei das Polyetherpolyol eine Funktionalität von 2,5 bis 4 und eine Hydroxylzahl von $\geq$ 3 mg KOH/g bis $\leq$ 112 mg KOH/g (Molekulargewicht 500 bis 18000) aufweist. PIPA-Polyole sind in GB 2 072 204 A, DE 31 03 757 A1 und US 4 374 209 A eingehend beschrieben.

Komponente A2

Gegebenenfalls werden als Komponente A2 Verbindungen mit mindestens zwei gegenüber Isocyanaten reaktionsfähigen Wasserstoffatomen und einer OH-Zahl gemäß DIN 53240 von $\geq$ 260 bis < 4000 mg KOH/g, bevorzugt > 400 bis $\leq$ 3000 mg KOH/g, besonders bevorzugt $\geq$ 1000 bis < 2000 mg KOH/g eingesetzt.

Hierunter sind Hydroxylgruppen und gegebenenfalls Aminogruppen, Thiolgruppen oder Carboxylgruppen aufweisende Verbindungen zu verstehen, vorzugsweise Hydroxylgruppen und gegebenenfalls Aminogruppen aufweisende Verbindungen. Diese Verbindungen weisen bevorzugt 2 bis 8, besonders bevorzugt 2 bis 4, gegenüber Isocyanaten reaktionsfähige Wasserstoffatome auf. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan), Tetraole (z.B. Pentaerythrit), Hexaole (z.B. Sorbit) oder Aminoalkohole (Ethanolamin, Diethanolamin, Triethanolamin) sein.

Es können aber auch kurzkettige Polyetherpolyole, Polyethercarbonatpolyole, Polyesterpolyole, Polyestercarbonatpolyole, Polythioetherpolyole, Polyacrylatpolyole oder Polycarbonatpolyole sein. Zur Herstellung dieser Polymere (Edukte, Verfahren) wird auf die Ausführungen zu Komponente A1 verwiesen.

Weitere Beispiele für Verbindungen gemäß Komponente A2 werden in EP-A 0 007 502, Seiten 16 - 17, beschrieben.

Komponente A3

Als Komponente A3 werden Wasser und/oder physikalische Treibmittel eingesetzt. Als physikalische Treibmittel werden beispielsweise Kohlendioxid und/oder leicht flüchtige organische Substanzen als Treibmittel eingesetzt.

Komponente A4

Als Komponente A4 werden gegebenenfalls Hilfs- und Zusatzstoffe verwendet wie

a) Katalysatoren (Aktivatoren),
b) oberflächenaktive Zusatzstoffe (Tenside), wie Emulgatoren und Schaumstabilisatoren insbesodere solche mit niedriger Emission wie beispielsweise Produkte der Tegostab® LF-Serie,
c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013), insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt a) Harnstoff, Derivate des Harnstoffs und/oder b) die oben genannten Amine und Aminoether, dadurch gekennzeichnet, dass die Amine und Aminoether eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen. Als Beispiele für besonders bevorzugte Katalysatoren seien genannt: (3-Dimethylaminopropylamin)-Harnstoff, 1,1'-((3-(dimethylamino)propyl)imino)bis-2-propanol, N-[2-[2-(dimethylamino)ethoxy]ethyl]-N-methyl-1,3-propanediamin und 3-Dimethylaminopropylamin.

Ausgenommen von Komponente A4 sind Radikalstarter und Katalysatoren, die eine vinylische Polymerisation katalysieren.

Komponente B

Komponente B umfasst

i) Verbindungen ausgewählt aus der Gruppe bestehend aus:

$$R^1R^2C=CR^3-C(O)-O-R^4 \qquad (I.),$$

$$R^5R^6C=CR^7-C(O)-O-R^8-O-(O)C-R^9C=CR^{10}R^{11} \qquad (II.),$$

$$R^{12}R^{13}C=CR^{14}-C(O)-O-(O)C-R^{14}C=CR^{13}R^{12} \qquad (III.)$$

und

$$R^{15}R^{16}C=CR^{17}-C(O)-NR^{18}-R^{19} \qquad (IV.),$$

wobei

$R^1$ bis $R^7$ und $R^9$ bis $R^{19}$ unabhängig voneinander für H, einen gesättigten oder ungesättigten, linearen oder verzweigten, aliphatischen oder cycloaliphatischen oder einen aromatischen oder araliphatischen Rest mit bis zu 20 Kohlenstoffatomen stehen, der gegebenenfalls Heteroatome, wie N, S oder O enthalten kann und der gegebenenfalls substituiert sein kann, beispielsweise durch isocyanatreaktive Gruppen, bevorzugt durch OH-Gruppen, und
$R^8$ für einen gesättigten oder ungesättigten, linearen oder verzweigten, aliphatischen zweibindigen Rest mit bis zu 20 Kohlenstoffatomen steht, der gegebenenfalls Heteroatome, wie N, S oder O enthalten kann und der gegebenenfalls substituiert sein kann, beispielsweise durch isocyanatreaktive Gruppen, bevorzugt durch OH-Gruppen,

und
ii) Polyesterpolyole, bevorzugt Polyesterdiole, erhältlich durch Polykondensation von Maleinsäure, Fumarsäure, Methacrylsäure oder Acrylsäure mit oligomeren Diolen wie Butandiol, Diethylenglykol, Propylenglycol, 1,3 Propandiol und/oder Triolen wie Glycerin mit einem Molekulargewichtsfaktor pro Doppelbindung von 150 bis 3000, einer Funktionalität von 2 bis 6, einer Hydroxylzahl von 20 bis 800 und einer Säurezahl von 0 bis 15.

Bevorzugt stehen in i) die Reste $R^1$ bis $R^{19}$ unabhängig voneinander für H, einen gesättigten oder ungesättigten, linearen oder verzweigten, aliphatischen oder cycloaliphatischen oder einen aromatischen oder araliphatischen Rest mit bis zu 12 Kohlenstoffatomen, der gegebenenfalls O-Atome als Heteroatome enthalten kann und der gegebenenfalls substituiert sein kann, beispielsweise durch isocyanatreaktive Gruppen, bevorzugt durch OH-Gruppen, und

$R^8$ für einen gesättigten oder ungesättigten, linearen oder verzweigten, aliphatischen zweibindigen Rest mit bis zu 12 Kohlenstoffatomen, der gegebenenfalls O-Atome als Heteroatome enthalten kann und der gegebenenfalls substituiert sein kann, beispielsweise durch isocyanatreaktive Gruppen, bevorzugt durch OH-Gruppen.

Besonders bevorzugt stehen in i)

der Rest R4 für -(C1-C12-Alkyl); -(C1-C12-Alkyl)-Ph oder-(C1-C12-Alkyl)-X, mit X = eine NCO-reaktive Gruppe, bevorzugt eine OH-Gruppe, der Rest R8 für -(C1-C12-Alkyl) oder -(C1-C12-Alkyl)-X, mit X = eine NCO-reaktive Gruppe, bevorzugt eine OH-Gruppe und

die Reste $R^{18}$ und/oder $R^{19}$ für -(C1-C12-Alkyl) oder -(C1-C12-Alkyl)-X, mit X = eine NCO-reaktive Gruppe, bevorzugt eine OH-Gruppe.

Lediglich beispielhaft seien die folgenden Verbindungen der Komponenten (I) bis (IV) und (ii) aufgeführt:Zimtsäurebenzylester, Trans-3-nonen-2-on, Hydroxyethylacrylat (HEA), Hydroxypropylacrylat (HPA), Hydroxyethylmethacrylat (HEMA), 3-(Acryloyl-oxy)-2-hydroxypropylacrylat, (Acryloyl-oxy)-2-hydroxypropylmethacrylat, Crotonsäureanhydrid, 2-Propansäure-1,4-butandiylbis[oxy(2-hydroxy-3,1-propandiyl)]ester; Ethylacrylamid; Hydroxyethylacrylamid; N-Methyl-N-(1,3-dihydroxypropyl)acrylamid; N-Methyl-N-(2-hydroxyethyl)acrylamid; N-Methyl-N-(2-hydroxypropyl)acrylamid; N-Methyl-N-(2-hydroxyisopropyl)acrylamid; N-Ethyl-N-(2-hydroxyethyl)acrylamid, 2-(N-methylprop-2-enamido)essigsäure und $\alpha,\beta$-ungesättigtes Polyesterdiol, hergestellt durch Polykondensation von Maleinsäureanhydrid, 1,3-Propandiol und Diethylenglykol im Molverhältnis 1 : 1 : 1.

Ganz besonders bevorzugt stehen in i)

der Rest R4 für -(C1-C12-Alkyl)-X, mit X = eine NCO-reaktive Gruppe, bevorzugt eine OH-Gruppe,

der Rest R8 für -(C1-C12-Alkyl)-X, mit X = eine NCO-reaktive Gruppe, bevorzugt eine OH-Gruppe und

die Reste $R^{18}$ und/oder $R^{19}$ für -(C1-C12-Alkyl)-X, mit X = eine NCO-reaktive Gruppe, bevorzugt eine OH-Gruppe.

Am meisten bevorzugt sind Hydroxyethylacrylat (HEA), Hydroxypropylacrylat (HPA), 3-(Acryloyl-oxy)-2-hydroxypropylacrylat, 2-Propansäure-1,4-butandiylbis[oxy(2-hydroxy-3,1-propandiyl)]ester, Hydroxyethylacrylamid; N-Methyl-N-(1,3-dihydroxypropyl)acrylamid; N-Methyl-N-(2-hydroxyethyl)acrylamid; N-Methyl-N-(2-hydroxypropyl)acrylamid; N-Methyl-N-(2-hydroxyisopropyl)acrylamid; N-Ethyl-N-(2-hydroxyethyl)acrylamid, 2-(N-methylprop-2-enamido)essigsäure und $\alpha,\beta$-ungesättigtes Polyesterdiol, hergestellt durch Polykondensation von Maleinsäureanhydrid, 1,3-Propandiol und Diethylenglykol im Molverhältnis 1 : 1 : 1 bevorzugt mit einer OH-Zahl von 336 mg KOH/g, einer Säurezahl von 0,7 und einem Molekulargewichtsfaktor pro Doppelbindung von 262.

Komponente C

Als Komponente C werden aliphatische, cycloaliphatische, araliphatische, aromatische und heterocyclische Polyisocyanate eingesetzt, wie sie z.B. von W. Siefken in Justus Liebigs Annalen der Chemie, 562, Seiten 75 bis 136, beschrieben werden, beispielsweise solche der Formel (V)

$$Q(NCO)_n \qquad (V)$$

in der

n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Uretdiongruppen, Uretdionimingruppen, Harnstoffgruppen oder Biuretgruppen aufweisenden Polyisocanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise werden als Komponente B mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt.

Ganz besonders bevorzugt wird als Komponente C eine Diphenylmethandiisocyanat-Mischung eingesetzt, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiisocyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer alternativen ganz besonders bevorzugten Ausführungsform wird als Komponente C eine Diphenylmethandiisocyanat-Mischung eingesetzt, bestehend aus

a) 35 bis 45 Gew.-% 4,4'-Diphenylmethandiisocyanat und
b) 1 bis 5 Gew.-% 2,2'-Diphenylmethandiisocyanat und/oder 2,4'-Diphenylmethandiisocyanat und
c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

Durchführung des Verfahrens zur Herstellung von Polyurethanschaumstoffen:

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die Isocyanat-reaktive Komponente B kann beispielsweise zuerst mit der Isocyanat-Komponente C zu einem Prepolymer umgesetzt werden und dann mit der Polyolformulierung A verschäumt werden. Eine weitere Möglichkeit besteht darin, die Isocyanat-reaktive Komponente B zunächst mit der Polyolformulierung A zu mischen und dann mit der Isocyanat-Komponente C zu verschäumen.

Bevorzugt ist es die Isocyanat-reaktive Komponente B zuerst mit der Isocyanat-Komponente C zu einem Prepolymer umzusetzen und dann das Prepolymer mit der Polyolformulierung A zu verschäumen.

Die PUR-Schaumstoffe können als Form- oder auch als Blockschaumstoffe hergestellt werden.

Die Formschaumstoffe können heiß- oder auch kalthärtend hergestellt werden.

Gegenstand der Erfindung sind daher ein Verfahren zur Herstellung der Polyurethanschaumstoffe, die nach diesem Verfahren hergestellten Polyurethanschaumstoffe und deren Verwendung zur Herstellung von Formteilen oder Blockware, sowie die Formteile bzw. die Blockware selbst.

Die nach der Erfindung erhältlichen Polyurethanschaumstoffe finden beispielsweise folgende Anwendung: Möbelpolsterungen, Textileinlagen, Matratzen, Automobilsitze, Kopfstützen, Armlehnen, Schwämme und Bauelemente, sowie Sitz- und Armaturverkleidungen , und weisen Kennzahlen von 70 bis 130, bevorzugt 80 bis 120 und Raumgewichte von 4 bis 600 kg/m$^3$, bevorzugt 60 bis 120 kg/m$^3$ (Weichschaum), bzw. 15 bis 55 (Halbhartschaum) auf.

Die Kennzahl (Isocyanat Index) gibt das prozentuale Verhältnis der tatsächlich eingesetzten Isocyanat-Menge zur stöchiometrischen, d.h. berechneten Isocyanat-Gruppen (NCO)-Menge an:

$$Kennzahl = [(Isocyanat\text{-}Menge\ eingesetzt) : (Isocyanat\text{-}Menge\ berechnet)] \bullet 100 \qquad (VI)$$

**Beispiele**

Herstellung der Schaumstoffe:

Als Kennzahl wird das Hundertfache des Verhältnisses von Isocyanat-Gruppen zu Isocyanat-reaktiven Gruppen bezeichnet. In den folgenden Versuchen werden immer Schaumstoffe miteinander verglichen, die unter Verwendung der gleichen Kennzahl hergestellt wurden. Es wurde in zwei Versuchsreihen eine Kennzahl unter 100 (Überschuß an Isocyanat-reaktiven Gruppen) und eine Kennzahl über 100 eingestellt.

Zur Herstellung der Schaumstoffe wird die notwendige Menge an Polyol in einem Pappbecher mit Blechboden (Volumen: ca. 850ml) vorgelegt und mit einem Rührwerk (Fa. Pendraulik) mit Standardrührscheibe (d = 64 mm) bei 4200 U/min 45 Sekunden lang mit Luft beladen. Für die Homogenisierung wird die Pendraulik-Standardrührscheibe (Durchmesser 64 mm) benutzt.

Das Isocyanat / Isocyanatgemisch / Prepolymer wird in einen geeigneten Becher eingewogen und wieder entleert (Auslaufzeit: 3 s). Dieser, an den Innenwandungen noch benetzte Becher wird tariert und wieder mit der angegebenen Isocyanatmenge gefüllt. Das Isocyanat wird der Polyolformulierung zugesetzt (Auslaufzeit: 3s). Die Mischung wird mit einem Rührwerk (Fa. Pendraulik) für 5 Sekunden intensiv vermischt. Zu Beginn der Vermischung wird eine Stoppuhr gestartet, von welcher die charakteristischen Reaktionszeiten abgelesen werden. Ca. 93 Gramm des Reaktionsgemisches werden in eine 23°C warme mit Teflonfolie ausgekleidete Kastenform aus Aluminium mit 1,6 dm$^3$ Volumen gegossen. Die Form wird verschlossen und verriegelt. Nach sechs Minuten wird die Verriegelung geöffnet, entspannt und der Formendruck wird über die Aufdrückhöhe des Formendeckels durch das Formteil [mm] qualitativ beurteilt. Das entformte Schaumkissen wird bezüglich Ausreaktion sowie Haut- und Porenstruktur qualitativ beurteilt.

Die Reaktionskinetik wird an dem Rest des Reaktionsgemisches im Becher bestimmt.

- Die Startzeit ist erreicht, wenn ein erstes Schäumen des Gemisches zu beobachten ist. Dies signalisiert den Beginn der Reaktion zwischen Isocyanat und Wasser.
- Die Abbindezeit ist erreicht, wenn man mit einem Holzsiedestäbchen durch Auftupfen auf die Oberfläche des aufsteigenden Schaumes Fäden ziehen kann. Alternativ bilden sich Klümpchen am Holzsiedestäbchen.
- Die Steigzeit ist erreicht, wenn der Schaum endgültig aufhört zu expandieren. Hierbei ist darauf zu achten, daß einige Systeme dazu neigen, ein Stück abzusacken und dann noch einmal weiter steigen.

Konditionierung der Schaumstoffe:

Alle Schaumstoffe wurden nach der Herstellung 7 Tage in einem Abzug bei 20-23°C aufbewahrt. Ein Teil der Schaumstoffe wurden vor der Messung der Aldehydemissionen in Aluminiumfolie verpackt bei 90°C in einem Umluft-Trockenschrank gelagert. Diese Schaumstoffe werden als "gealtert" bezeichnet.

Mechanische Charakterisierung der Schaumstoffe

Stauchhärte und Dämpfung wurden an Prüfkörpern von 5*5*5 cm$^3$ parallel zur Aufschäumrichtung bei 40% Stauchung gemessen. Eine Vorkraft von 2 kPa wurde dabei eingestellt. Die Vorschubgeschwindigkeit betrug 50 mm/min.
Die Hydroxylzahl wurde gemäß DIN 53240 bestimmt.

Prüfmethoden:

Bestimmung der Aldehyd-Emissionen:

a) Messmethode 1 (Flaschenmethode nach VDA 275):

In eine Glasflasche von einem Liter Volumen werden 50 Milliliter Wasser gegeben. Am Deckel wird eine Schaumstoffplatte der Größe 40*10*2 cm$^3$ frei hängend befestigt so dass der Schaumstoff nicht mit der wäßrigen Lösung am Boden der Flasche in Kontakt ist. Die Flasche wird verschlossen und 3 Stunden in einen Umlufttrockenschrank bei 60 °C gelagert. Man läßt die Flasche auf Raumtemperatur abkühlen, entnimmt den Schaumstoff. Ein Aliquot der wässrigen Lösung wird mit einer Lösung von 0,3 mmol/Liter Dinitrophenylhydrazin (DNPH) in 3 mM phosphorsaurem Acetonitril umgesetzt. Man analysiert die Zusammensetzung der wäßrigen Lösung per LC-MS/MS auf die Hydrazone der unten angegebenen Aldehyde. Zu jeder Schaumqualität werden drei Flaschen untersucht. Bei jedem Versuchslauf werden drei Flaschen ohne Schaumstoff mit untersucht. Der mittlere Blindwert wird von den Meßwerten abgezogen. Auf dieser Basis wird auf die Emission der jeweiligen Aldehyde pro Kilogramm Schaumstoff zurückgerechnet. Die Angabe erfolgt im mg Aldehyd pro kg Schaumstoff.

b) Messmethode 2 (modifizierte Flaschenmethode):

In eine Glasflasche von einem Liter Volumen werden 25 Milliliter Wasser und 25 Milliliter einer Lösung von 0,3 mmol/Liter Dinitrophenylhydrazin (DNPH) in 3 mM phosphorsaurem Acetonitril gegeben. Der Gehalt an DNPH beträgt 7,5 μmol pro Flasche. Am Deckel wird eine Schaumstoffplatte der Größe 40*10*4 cm$^3$ frei hängend befestigt so dass der Schaumstoff nicht mit der wäßrigen Lösung am Boden der Flasche in Kontakt ist. Die Flasche wird verschlossen und 3 Stunden in einen Umlufttrockenschrank bei 65 °C gelagert. Man läßt die Flasche auf Raumtemperatur abkühlen, entnimmt den Schaumstoff und analysiert die Zusammensetzung der wäßrigen Lösung per LC-MS/MS auf die Hydrazone der unten angegebenen Aldehyde. Zu jeder Schaumqualität werden drei Flaschen untersucht. Bei jedem Versuchslauf werden drei Flaschen ohne Schaumstoff mit untersucht. Der mittlere Blindwert wird von den Meßwerten abgezogen. Auf dieser Basis wird auf die Emission der jeweiligen Aldehyde pro Kilogramm Schaumstoff zurückgerechnet. Die Angabe erfolgt im mg Aldehyd pro kg Schaumstoff.

Zur Illustration der Methoden werden hier die Emissionen für die Kombination der Standardpolyolformulierung mit Isocyanat B1 dargestellt:

Formaldehyd

| Lagerung | Kennzahl | VDA275 | VDA275 modifiziert | | Verbesserung der Sichtbarkeit |
|---|---|---|---|---|---|
| 7 Tage 20-23°C | 90 | 4,0 | 7,5 | mg/kg | 88% |
| | 105 | 3,5 | 5,6 | mg/kg | 60% |
| 11 Tage 90°C und 7 Tage 20-23°C | 90 | 3,7 | 7,6 | mg/kg | 105% |
| | 105 | 3,9 | 9,4 | mg/kg | 141% |

Acetaldehyd

| Lagerung | Kennzahl | VDA275 | VDA275 modifiziert | | Verbesserung der Sichtbarkeit |
|---|---|---|---|---|---|
| 7 Tage 20-23°C | 90 | 0,5 | 1,1 | mg/kg | 120% |
| | 105 | 0,3 | 0,8 | mg/kg | 167% |
| 11 Tage 90°C und 7 Tage 20-23°C | 90 | 0,6 | 1,5 | mg/kg | 150% |
| | 105 | 0,6 | 1,8 | mg/kg | 200% |

Beschreibung der Rohstoffe

Polyolkomponente:

Als Polyolkomponente wurde ein Polyether-Gemisch aus einem Glyzerin-gestarteten Polyalkylenoxid mit einem Molgewicht von 4,8 kg/mol und einem Propylenglycol-gestarteten Polyalkylenoxid mit einem Molgewicht von 4 kg/mol eingesetzt. Das Gewichtsverhältnis der beiden Polyether betrug 55:45.

Die Polyolkomponente enthält darüber hinaus verschiedene Zusatzmittel.

- Farbpaste ist Schwarzpaste Isopur N (ISL-Chemie),
- Schaumstabilisator ist Tegostab B8734LF2 (Evonik),
- Zellöffner ist ein Glyzerin-gestartetes Polyalkylenoxid mit einer OH-Zahl von 37 mg KOH/g.
- Als Vernetzer wurde Triethanolamin eingesetzt.
- Als Treibmittel wurde Wasser eingesetzt.
- Als Katalysatoren wurde eine Mischung aus Jeffcat DPA der Firma Huntsman und Dabco NE 300 der Firma Air Products (6:1 nach Gewicht) eingesetzt.

| | Gewichts-% in der Polyolkomponente |
|---|---|
| Polyether-Gemisch | 91,53 |
| Zellöffner | 1,53 |
| Farbpaste | 0,21 |
| Schaumstabilisator | 0,77 |
| Vernetzer | 0,62 |
| Treibmittel | 3,91 |

(fortgesetzt)

| Katalysator | 1,44 |
|---|---|

Isocyanate:

| B1 (Vergleich) | Ist ein handelsübliches Gemisch aus MDI Isomeren und Homologen mit einer Dichte von 1,24 kg/Liter, einem Isocyanat-Gehalt von 323 g/kg und einer Viskosität von 0,05 Pa*s. Der Gehalt an 4,4'-MDI beträgt 60 Gew.-%. |
|---|---|
| B2 (Vergleich oder Erfindung) | Besteht aus 92,54 Gew.-% Isocyanat V und 7,46 Gew.-% Methacrylsäuremonoethylenglykolester, 97%ig (Fa. Aldrich). Der Isocyanat-Gehalt liegt bei 272 g/kg und die Viskosität bei 0,12 Pa*s (25°C). |
| B3 (Erfindung) | Besteht aus 92,55 Gew.-% Isocyanat V und 7,45 Gew.-% Acrylsäurehydroxypropylester 95%ig (Isomerengemisch, Fa. Aldrich). Der Isocyanat-Gehalt liegt bei 272 g/kg und die Viskosität bei 0,13 Pa*s (25°C). |
| B4 (Erfindung) | Besteht aus 92,97 Gew.-% Isocyanat V und 7,03 Gew.-% Acrylsäurehydroxyethylester 96%ig (Fa. Aldrich). Der Isocyanat-Gehalt liegt bei 272 g/kg und einer Viskosität bei 0,12 Pa*s (25°C). |

Ergebnisse

Kennzahl 90

| Isocyanat | | B2 | B3 | B4 | B1 | B1 |
|---|---|---|---|---|---|---|
| | | Vergleich | Erfindung | Erfindung | Erfindung | Vergleich |
| Zusatz zum Basispolyol | | keiner | keiner | keiner | 50 g HEAA/kg | keiner |
| Startzeit | Sekunden | 12 | 12 | 12 | 12 | 10 |
| Abbindezeit | Sekunden | 62 | 61 | 61 | 54 | 50 |
| Steigzeit | Sekunden | 93 | 90 | 89 | 71 | 69 |
| Deckelhub | mm | 10 | 10 | 10 | 10 | 10 |
| Kernrohdichte | kg/m$^3$ | 51 | 51 | 51 | 47 | 49 |
| Stauchhärte | kPa | 11 | 7 | 7 | 8 | 9 |
| Dämpfung | % | 46 | 46 | 45 | 37 | 37 |
| Acetaldehyd | mg/kg | 1,1 | 0,6 | 0,5 | 0,6 | 1,1 |

HEAA ist Hydroxyethylacrylamid (Fa. Aldrich)
Eine Wirkung des Isocyanates B2 auf die Acetaldehydemissionen ist - anders als mit den Isocyanaten B3 und B4 - nicht feststellbar.

Kennzahl 105

| Isocyanat | | B2 | B3 | B4 | B1 | B1 |
|---|---|---|---|---|---|---|
| | | Vergleich | Erfindung | Erfindung | Erfindung | Vergleich |
| Zusatz zum Basispolyol | | keiner | keiner | keiner | 50 g HEAA/kg | keiner |
| Startzeit | Sekunden | 13 | 12 | 12 | 12 | 10 |
| Abbindezeit | Sekunden | 66 | 64 | 66 | 54 | 51 |

(fortgesetzt)

| Isocyanat | | B2 | B3 | B4 | B1 | B1 |
|---|---|---|---|---|---|---|
| | | Vergleich | Erfindung | Erfindung | Erfindung | Vergleich |
| Steigzeit | Sekunden | 98 | 101 | 107 | 75 | 70 |
| Deckelhub | mm | 10 | 10 | 10 | 10 | 10 |
| Kernrohdichte | kg/m$^3$ | 53 | 50 | 51 | 49 | 49 |
| Stauchhärte | kPa | 13 | 11 | 12 | 15 | 14 |
| Dämpfung | % | 53 | 52 | 51 | 49 | 44 |
| Acetaldehyd | mg/kg | 0,9 | 0,6 | 0,7 | 0,6 | 0,8 |

Bei höherer Kennzahl sind die Unterschiede weniger deutlich und dennoch weiter sichtbar. Eine Wirkung des Isocyanates B2 auf die Acetaldehydemissionen ist auch bei erhöhter Kennzahl - anders als mit den Isocyanaten B3 und B4 - nicht feststellbar.

**Patentansprüche**

1. Verwendung von $\alpha,\beta$-ungesättigten Carbonsäurederivaten, bevorzugt $\alpha,\beta$-ungesättigten Carbonsäureestern und/oder -amiden in Verfahren zur Herstellung von Polyurethanen, bevorzugt Polyurethanschaumstoffen zur Erniedrigung der Aldehydemission der resultierenden Polyurethane, bzw. Polyurethanschaumstoffe.

2. Verwendung gemäß Anspruch 1, wobei es sich bei den $\alpha,\beta$-ungesättigten Carbonsäureestern bzw. -amiden handelt um:

   i) eine oder mehrerer Verbindungen ausgewählt aus der Gruppe bestehend aus

   $$R^1R^2C=CR^3\text{-}C(O)\text{-}O\text{-}R^4 \qquad (I.),$$

   $$R^5R^6C=CR^7\text{-}C(O)\text{-}O\text{-}R^8\text{-}O\text{-}(O)C\text{-}R^9C=CR^{10}R^{11} \qquad (II.),$$

   $$R^{12}R^{13}C=CR^{14}\text{-}C(O)\text{-}O\text{-}(O)C\text{-}R^{14}C=CR^{13}R^{12} \qquad (III.)$$

   und

   $$R^{15}R^{16}C=CR^{17}\text{-}C(O)\text{-}NR^{18}\text{-}R^{19} \qquad (IV.),$$

   wobei

   $R^1$ bis $R^7$ und $R^9$ bis $R^{19}$ unabhängig voneinander für H, einen gesättigten oder ungesättigten, linearen oder verzweigten, aliphatischen oder cycloaliphatischen oder einen aromatischen oder araliphatischen Rest mit bis zu 20 Kohlenstoffatomen stehen, der gegebenenfalls Heteroatome, wie N, S oder O enthalten kann und der gegebenenfalls substituiert sein kann, beispielsweise durch isocyanatreaktive Gruppen, bevorzugt durch OH-Gruppen,
   und
   $R^8$ für einen gesättigten oder ungesättigten, linearen oder verzweigten, aliphatischen zweibindigen Rest mit bis zu 20 Kohlenstoffatomen steht, der gegebenenfalls Heteroatome, wie N, S oder O enthalten kann und der gegebenenfalls substituiert sein kann, beispielsweise durch isocyanatreaktive Gruppen, bevorzugt durch OH-Gruppen,

   bzw.
   ii) Polyesterpolyole, bevorzugt Polyesterdiole, erhältlich durch Polykondensation von Maleinsäure, Fumarsäure, Methacrylsäure oder Acrylsäure mit oligomeren Diolen wie Butandiol, Diethylenglykol, Propylenglycol, 1,3 Propandiol und/oder Triolen wie Glycerin mit einem Molekulargewichtsfaktor pro Doppelbindung von 150 bis 3000, einer Funktionalität von 2 bis 6, einer Hydroxylzahl von 20 bis 800 und einer Säurezahl von 0 bis 15.

3. Verwendung gemäß Anspruch 2, wobei die Herstellung der Polyurethanschaumstoffe durch Reaktion einer Komponente A, enthaltend:

A1 gegenüber Isocyanaten reaktionsfähige Wasserstoffatome aufweisende Verbindungen mit einer OH-Zahl gemäß DIN 53240 von ≥ 15 bis < 260 mg KOH/g,
A2 gegebenenfalls gegenüber Isocyanaten reaktionsfähige Wasserstoffatome aufweisende Verbindungen mit einer OH-Zahl gemäß DIN 53240 von ≥ 260 bis < 4000 mg KOH/g,
A3 Wasser und/oder physikalischen Treibmittel,
A4 Hilfs- und Zusatzstoffen wie

a) Katalysatoren,
b) oberflächenaktive Zusatzstoffen,
c) Pigmenten und/oder Flammschutzmitteln,

wobei Radikalstarter und Katalysatoren, die eine vinylische Polymerisation katalysieren, ausgenommen sind,

und einer Komponente B, wobei es sich um eine oder mehrere Verbindungen ausgewählt aus der Gruppe bestehend aus (I) bis (IV) bzw. (ii) handelt, mit
C Di- und/oder Polyisocyanaten erfolgt.

4. Verwendung gemäß einem der Ansprüche 2 oder 3 wobei die Herstellung der Polyurethanschaumstoffe durch Reaktion einer Komponente A, enthaltend:

A1 75 bis 99,3 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 15 bis < 260 mg KOH/g,
A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 260 bis < 4000 mg KOH/g,
A3 0,5 bis 24,8 Gew.-Teile (bezogen auf die Summe der Gew.-Teile der Komponenten A1 bis A4) Wasser und/oder physikalische Treibmittel,
A4 0,2 bis 10 Gew.-Teile (bezogen auf die Summe der Gew.-Teile der Komponenten A1 bis A4) Hilfs- und Zusatzstoffe wie

a) Katalysatoren,
b) oberflächenaktive Zusatzstoffe,
c) Pigmente und/oder Flammschutzmittel,

wobei Radikalstarter und Katalysatoren, die eine vinylische Polymerisation katalysieren, ausgenommen sind,

und 1 bis 100 g pro kg der Komponenten A1 und C, bevorzugt 5 bis 50 g pro kg der Komponenten A1 und C einer Komponente B, wobei es sich um eine oder mehrere Verbindungen ausgewählt aus der Gruppe bestehend aus (I) bis (IV) bzw. (ii) handelt,
mit
C Di- und/oder Polyisocyanaten erfolgt,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

5. Verwendung gemäß einem der Ansprüche 2 oder 3 wobei die Herstellung der Polyurethanschaumstoffe durch Reaktion einer Komponente A, enthaltend:

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 15 bis < 260 mg KOH/g,
A2 20 bis 74,3 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN

53240 von $\geq$ 260 bis < 4000 mg KOH/g,

A3 0,5 bis 25 Gew.-Teile (bezogen auf die Summe der Gew.-Teile der Komponenten A1 bis A4) Wasser und/oder physikalische Treibmittel,

A4 0,2 bis 10 Gew.-Teile (bezogen auf die Summe der Gew.-Teile der Komponenten A1 bis A4) Hilfs- und Zusatzstoffe wie

    a) Katalysatoren,
    b) oberflächenaktive Zusatzstoffe,
    c) Pigmente und/oder Flammschutzmittel,

wobei Radikalstarter und Katalysatoren, die eine vinylische Polymerisation katalysieren, ausgenommen sind,

und 1 bis 100 g pro kg der Komponenten A1 und C, bevorzugt 5 bis 50 g pro kg der Komponenten A1 und C einer Komponente B, wobei es sich um eine oder mehrere Verbindungen ausgewählt aus der Gruppe bestehend aus (I) bis (IV) bzw. (ii) handelt,
mit
C Di- und/oder Polyisocyanaten erfolgt,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

6. Verfahren zur Herstellung von Polyurethanen, bevorzugt Polyurethanschaumstoffen durch Umsetzung von gegenüber Isocyanaten reaktionsfähigen Wasserstoffatomen aufweisenden Verbindungen mit Di- und/oder Polyisocyanaten in Gegenwart von $\alpha,\beta$-ungesättigten Carbonsäureamiden.

7. Verfahren zur Herstellung von Polyurethanen, bevorzugt Polyurethanschaumstoffen gemäß Anspruch 6 wobei als $\alpha,\beta$-ungesättigten Carbonsäureamiden eine oder mehrere Verbindungen der Formel

$$R^{15}R^{16}C=CR^{17}-C(O)-NR^{18}-R^{19} \qquad (IV.),$$

wobei
$R^{15}$ bis $R^{19}$ unabhängig voneinander für H, einen gesättigten oder ungesättigten, linearen oder verzweigten, aliphatischen oder cycloaliphatischen oder einen aromatischen oder araliphatischen Rest mit bis zu 20 Kohlenstoffatomen stehen, der gegebenenfalls Heteroatome, wie N, S oder O enthalten kann und der gegebenenfalls substituiert sein kann, beispielsweise durch isocyanatreaktive Gruppen, bevorzugt durch OH-Gruppen, eingesetzt werden.

8. Verfahren zur Herstellung von Polyurethanschaumstoffen gemäß Anspruch 7, bei dem eine Komponente A, enthaltend

A1 gegenüber Isocyanaten reaktionsfähige Wasserstoffatome aufweisende Verbindungen mit einer OH-Zahl gemäß DIN 53240 von $\geq$ 15 bis < 260 mg KOH/g,

A2 gegebenenfalls gegenüber Isocyanaten reaktionsfähige Wasserstoffatome aufweisende Verbindungen mit einer OH-Zahl gemäß DIN 53240 von $\geq$ 260 bis < 4000 mg KOH/g,

A3 Wasser und/oder physikalischen Treibmittel,

A4 Hilfs- und Zusatzstoffe wie

    a) Katalysatoren,
    b) oberflächenaktive Zusatzstoffe,
    c) Pigmente und/oder Flammschutzmittel,

wobei Radikalstarter und Katalysatoren, die eine vinylische Polymerisation katalysieren, ausgenommen sind,
und eine Komponente B, wobei es sich um eine oder mehrere Verbindungen der Formel (IV) handelt,
mit
C Di- und/oder Polyisocyanaten
umgesetzt werden.

9. Verfahren zur Herstellung von Polyurethanschaumstoffen gemäß einem der Ansprüche 7 oder 8, bei dem eine Komponente A, enthaltend

A1 75 bis 99,3 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 15 bis < 260mg KOH/g,

A2 0 bis 10 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 260 bis < 4000 mg KOH/g,

A3 0,5 bis 24,8 Gew.-Teile (bezogen auf die Summe der Gew.-Teile der Komponenten A1 bis A4) Wasser und/oder physikalische Treibmittel,

A4 0,2 bis 10 Gew.-Teile (bezogen auf die Summe der Gew.-Teile der Komponenten A1 bis A4) Hilfs- und Zusatzstoffe wie

    a) Katalysatoren,
    b) oberflächenaktive Zusatzstoffe,
    c) Pigmente und/oder Flammschutzmittel,

wobei Radikalstarter und Katalysatoren, die eine vinylische Polymerisation katalysieren, ausgenommen sind,

und

1 bis 100 g pro kg der Komponenten A1 und C, bevorzugt 5 bis 50 g pro kg der Komponenten A1 und C einer Komponente B, wobei es sich um eine oder mehrere Verbindungen der Formel (IV) handelt,

mit
C Di- und/oder Polyisocyanaten
umgesetzt werden,

wobei alle Gewichtsteilangaben der Komponenten A1 bis A4 so normiert sind, dass die Summe der Gewichtsteile der Komponenten A1+A2+A3+A4 in der Zusammensetzung 100 ergeben.

**10.** Verfahren zur Herstellung von Polyurethanschaumstoffen gemäß einem der Ansprüche 7 oder 8, bei dem eine Komponente A, enthaltend

A1 25 bis 45 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 15 bis < 260mg KOH/g,

A2 20 bis 74,3 Gew.-Teile (bezogen auf die Summe der Gew.-Teile der Komponenten A1 bis A4) gegenüber Isocyanaten reaktionsfähigen Wasserstoffatomen aufweisenden Verbindungen mit einer OH-Zahl gemäß DIN 53240 von ≥ 260 bis < 4000 mg KOH/g,

A3 0,5 bis 25 Gew.-Teile (bezogen auf die Summe der Gew.-Teile der Komponenten A1 bis A4) Wasser und/oder physikalische Treibmittel, bevorzugt 2-7 Gew.-Teile Wasser,

A4 0,2 bis 10 Gew.-Teile (bezogen auf die Summe der Gew.-Teile der Komponenten A1 bis A4) Hilfs- und Zusatzstoffe wie
a) Katalysatoren,
b) oberflächenaktive Zusatzstoffe,
c) Pigmente und/oder Flammschutzmittel,

wobei Radikalstarter und Katalysatoren, die eine vinylische Polymerisation katalysieren, ausgenommen sind, und
1 bis 100 g pro kg der Komponenten A1 und C, bevorzugt 5 bis 50 g pro kg der Komponenten A1 und C einer Komponente B, wobei es sich um eine oder mehrere Verbindungen der Formel (IV) handelt,
mit
C Di- und/oder Polyisocyanaten
umgesetzt werden,
wobei alle Gewichtsteilangaben der Komponenten A1 bis A4 so normiert sind, dass die Summe der Gewichtsteile der Komponenten A1+A2+A3+A4 in der Zusammensetzung 100 ergeben.

**11.** Verwendung gemäß einem der Ansprüche 2 bis 5, wobei

die Reste $R^1$ bis $R^3$, $R^5$ bis $R^7$ und $R^9$ bis $R^{18}$ unabhängig voneinander für H, einen gesättigten oder ungesättigten, linearen oder verzweigten, aliphatischen oder cycloaliphatischen oder einen aromatischen oder araliphatischen Rest mit bis zu 12 Kohlenstoffatomen, der gegebenenfalls O-Atome als Heteroatome enthalten kann und der gegebenenfalls substituiert sein kann, beispielsweise durch isocyanatreaktive Gruppen, bevorzugt durch OH-Gruppen, stehen,

der Rest R4 für -(C1-C12-Alkyl); -(C1-C12-Alkyl)-Ph oder-(C1-C12-Alkyl)-X, mit X = eine NCO-reaktive Gruppe, bevorzugt eine OH-Gruppe, steht, und

die Reste R8 und R19 unabhängig voneinander für -(C1-C12-Alkyl) oder -(C1-C12-Alkyl)-X, mit X = eine NCO-reaktive Gruppe, bevorzugt eine OH-Gruppe stehen,

oder Verfahren gemäß einem der Ansprüche 7 bis 10,wobei

die Reste $R^{15}R^{18}$ unabhängig voneinander für H, einen gesättigten oder ungesättigten, linearen oder verzweigten, aliphatischen oder cycloaliphatischen oder einen aromatischen oder araliphatischen Rest mit bis zu 12 Kohlenstoffatomen, der gegebenenfalls O-Atome als Heteroatome enthalten kann und der gegebenenfalls substituiert sein kann, beispielsweise durch isocyanatreaktive Gruppen, bevorzugt durch OH-Gruppen, stehen, und der Rest R19 für -(C1-C12-Alkyl) oder -(C1-C12-Alkyl)-X, mit X = eine NCO-reaktive Gruppe, bevorzugt eine OH-Gruppe stehen,

12. Verwendung gemäß Anspruch 11, wobei

Zimtsäurebenzylester, Trans-3-nonen-2-on, Hydroxyethylacrylat (HEA), Hydroxypropylacrylat (HPA), Hydroxyethylmethacrylat (HEMA), 3-(Acryloyl-oxy)-2-hydroxypropylacrylat, (Acryloyl-oxy)-2-hydroxypropylmethacrylat, Crotonsäureanhydrid, 2-Propansäure-1,4-butandiylbis[oxy(2-hydroxy-3,1-propandiyl)]ester; Ethylacrylamid; Hydroxyethylacrylamid; N-Methyl-N-(1,3-dihydroxypropyl)acrylamid; N-Methyl-N-(2-hydroxyethyl)acrylamid; N-Methyl-N-(2-hydroxypropyl)acrylamid; N-Methyl-N-(2-hydroxyisopropyl)acrylamid; N-Ethyl-N-(2-hydroxyethyl)acrylamid, 2-(N-methylprop-2-enamido)essigsäure und/oder ein $\alpha,\beta$-ungesättigtes Polyesterdiol, hergestellt durch Polykondensation von Maleinsäureanhydrid, 1,3-Propandiol und Diethylenglykol im Molverhältnis 1 : 1 : 1 als Komponente B eingesetzt werden,

oder Verfahren gemäß Anspruch 11, wobei Ethylacrylamid; Hydroxyethylacrylamid; N-Methyl-N-(1,3-dihydroxypropyl)acrylamid; N-Methyl-N-(2-hydroxyethyl)acrylamid; N-Methyl-N-(2-hydroxypropyl)acrylamid; N-Methyl-N-(2-hydroxyisopropyl)acrylamid und/oder N-Ethyl-N-(2-hydroxyethyl)acrylamid als Komponente B eingesetzt werden.

13. Verwendung gemäß einem der Ansprüche 3 bis 5 oder 11 oder 12 oder Verfahren gemäß einem der Ansprüche 8 bis 12, wobei als gegenüber Isocyanaten reaktionsfähige Wasserstoffatome aufweisenden Verbindungen (Komponente A1) mindestens zwei Hydroxylgruppen aufweisenden Polyether, gegebenenfalls in Mischung mit mindestens zwei Hydroxylgruppen aufweisenden Polyestern eingesetzt werden.

14. Verwendung gemäß einem der Ansprüche 3 bis 5 oder 11 bis 13 oder Verfahren gemäß einem der Ansprüche 8 bis 13, wobei Komponente A1 mindestens 30 Gew.-% mindestens eines Polyoxyalkylen-Copolymers enthält, bestehend aus einem Starter, Propylenoxid und Ethylenoxid und einem Endblock aus Ethylenoxid, wobei das Gesamtgewicht der Endblöcke im Mittel 3-20 Gew.-%, bevorzugt 5-15, besonders bevorzugt 6-10 Gew.-% bezogen auf das gesamte Gewicht aller Polyoxyalkylen-Copolymere beträgt.

15. Verwendung gemäß einem der Ansprüche 3 bis 5 oder 11 bis 14 oder Verfahren gemäß einem der Ansprüche 8 bis 14, wobei als Di- und/oder Polyisocyanat-Komponente (Komponente C) eine Diphenylmethandiisocyanat-Mischung, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiisocyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine,

verwendet wird.

16. Verwendung gemäß einem der Ansprüche 3 bis 5 oder 11 bis 14 oder Verfahren gemäß einem der Ansprüche 8 bis 14, wobei als Di- und/oder Polyisocyanat-Komponente (Komponente C) eine Diphenylmethandiisocyanat-Mischung, bestehend aus

a) 35 bis 45 Gew.-% 4,4'-Diphenylmethandiisocyanat und

b) 1 bis 5 Gew.-% 2,2'-Diphenylmethandiisocyanat und/oder 2,4'-Diphenylmethandiisocyanat und
c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine,

verwendet wird.

17. Polyurethane, bzw. Polyurethanschaumstoffe erhältlich nach einem Verfahren gemäß einem der Ansprüche 6 bis 16.

18. Polyurethane, bzw. Polyurethanschaumstoffe gemäß Anspruch 17 mit einem Raumgewicht von 4 bis 600 kg/m$^3$, bevorzugt 60 bis 120 kg/m$^3$ (Weichschaum), bzw. bevorzugt 15 bis 35 (Halbhartschaum).

19. Verwendung von Polyurethanen, bevorzugt Polyurethanschaumstoffen mit erniedrigter Aldehydemission erhältlich nach einem der Ansprüche 6 bis 16 zur Herstellung von Möbelpolsterungen, Textileinlagen, Matratzen, Automobilsitzen, Kopfstützen, Armlehnen, Schwämmen, Dachhimmeln, Türseitenverkleidungen, Sitzauflagen oder Bauelementen.

Europäisches
Patentamt

European
Patent Office

Office européen
des brevets

## EUROPÄISCHER RECHERCHENBERICHT

Nummer der Anmeldung

EP 16 20 2104

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2012/184639 A1 (HAAS PETER [DE] ET AL) 19. Juli 2012 (2012-07-19) * Tabelle 1 * ----- | 1-19 | INV. C08G18/48 C08G18/66 C08G18/76 C08G18/81 C08G18/32 |

RECHERCHIERTE
SACHGEBIETE (IPC)

C08G

Der vorliegende Recherchenbericht wurde für alle Patentansprüche erstellt

| Recherchenort | Abschlußdatum der Recherche | Prüfer |
|---|---|---|
| München | 7. Juni 2017 | Bergmeier, Martin |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 20 2104

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-06-2017

| Im Recherchenbericht angeführtes Patentdokument | Datum der Veröffentlichung | Mitglied(er) der Patentfamilie | Datum der Veröffentlichung |
|---|---|---|---|
| US 2012184639 A1 | 19-07-2012 | CA 2775606 A1 | 07-04-2011 |
| | | CN 102574973 A | 11-07-2012 |
| | | DE 102009047846 A1 | 31-03-2011 |
| | | EP 2483324 A1 | 08-08-2012 |
| | | ES 2544884 T3 | 04-09-2015 |
| | | JP 2013506722 A | 28-02-2013 |
| | | RU 2012117413 A | 10-11-2013 |
| | | US 2012184639 A1 | 19-07-2012 |
| | | WO 2011038846 A1 | 07-04-2011 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015082316 A
- JP 2004129926 B
- DE 19919826
- DE 1694142 A
- DE 1694215 A
- DE 1720768 A
- EP 0007502 A
- US 1922451 A
- US 674619 A2
- US 1922459 A
- US 3190927 A
- US 3346557 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- EP 2046861 A
- US 4089835 A
- US 4260530 A
- GB 2072204 A
- DE 3103757 A1
- US 4374209 A
- EP 0000389 A
- EP 0176013 A
- EP 355000 A

**In der Beschreibung aufgeführte Nicht-Patentliteratur**

- Polyurethane. Kunststoff-Handbuch. Carl Hanser Verlag, 1966, vol. VII
- Neuauflage dieses Buches. Carl Hanser Verlag, 1993
- Polyurethane. Kunststoffhandbuch. vol. 7
- Kunststoff-Handbuch. Carl-Hanser-Verlag, 1993, vol. VII, 104-127
- **W. SIEFKEN.** *Justus Liebigs Annalen der Chemie,* vol. 562, 75-136
- Kunststoff-Handbuch. Carl-Hanser-Verlag, 1993, vol. VII, 139-265